# EUROPÄISCHE PATENTSCHRIFT

(11) **EP 2 927 354 B1**
(45) Veröffentlichungstag und Bekanntmachung des Hinweises auf die Patenterteilung: **24.10.2018**
(21) Anmeldenummer: 15162419.4
(22) Anmeldetag: 02.04.2015
(51) Int. Cl.: D01H 1/115, D01H 13/30

(54) **LUFTSPINNMASCHINE UMFASSEND EINE SPINNSTELLE SOWIE VERFAHREN ZUM BETRIEB EINER LUFTSPINNMASCHINE**
AIR JET SPINNING MACHINE COMPRISING A SPINNING UNIT AND A METHOD FOR OPERATING AN AIR JET SPINNING MACHINE
MÉTIER À FILER À JET D'AIR COMPRENANT UN POSTE DE FILAGE ET PROCÉDÉ DE FONCTIONNEMENT D'UN MÉTIER À FILER À JET D'AIR

(30) Priorität: 03.04.2014 CH 5222014
(43) Veröffentlichungstag der Anmeldung: 07.10.2015
(73) Patentinhaber: MASCHINENFABRIK RIETER AG, 8406 Winterthur (CH)
(72) Erfinder: Hofmann, Ronald, 8264 Eschenz (CH); Fischer, Andreas, 8266 Steckborn (CH)
(74) Vertreter: Baudler, Ron

(56) Entgegenhaltungen:
- EP-A1- 2 620 532
- EP-A2- 2 450 478
- JP-A- 2008 095 208
- US-A- 3 563 019
- US-A- 4 100 724

## Beschreibung

Die vorliegende Erfindung betrifft eine Luftspinnmaschine umfassend eine Spinnstelle mit einer Spinndüse, die der Herstellung eines Garns aus einem der Spinndüse zugeführten Faserverband dient, wobei die Spinndüse einen Einlass für den Faserverband, eine innenliegende Wirbelkammer, ein in die Wirbelkammer ragendes Garnbildungselement sowie einen Auslass für das im Inneren der Wirbelkammer erzeugte Garn aufweist.
Darüber hinaus wird ein Verfahren zum Betrieb einer Luftspinnmaschine vorgeschlagen, wobei die Luftspinnmaschine wenigstens eine Spinnstelle aufweist, wobei die Spinnstelle zumindest eine Spinndüse aufweist, wobei der Spinndüse während des Betriebs der Spinnstelle ein Faserverband über einen Einlass zugeführt wird, und wobei der Faserverband innerhalb einer Wirbelkammer der Spinndüse eine Drehung erhält, so dass aus dem Faserverband ein Garn gebildet wird, das die Spinnstelle schließlich über einen Auslass verlässt. Luftspinnmaschinen mit entsprechenden Spinnstellen sind im Stand der Technik bekannt und dienen der Herstellung eines Garns aus einem länglichen Faserverband. Die äußeren Fasern des Faserverbands werden hierbei mit Hilfe einer durch die Luftdüsen innerhalb der Wirbelkammer erzeugten Wirbelluftströmung im Bereich einer Einlassmündung des Garnbildungselements um die innenliegenden Kernfasern gewunden und bilden schließlich die für die gewünschte Festigkeit des Garns ausschlaggebenden Umwindefasern. Hierdurch entsteht ein Garn mit einer echten Drehung, welches schließlich über einen Abzugskanal aus der Wirbelkammer abgeführt und z. B. auf eine Hülse aufgewickelt werden kann.
Generell ist im Sinne der Erfindung unter dem Begriff Garn also ein Faserverband zu verstehen, bei dem zumindest ein Teil der Fasern um einen innenliegenden Kern gewunden sind. Umfasst ist somit ein Garn im herkömmlichen Sinne, das beispielsweise mit Hilfe einer Webmaschine zu einem Stoff verarbeitet werden kann. Ebenso betrifft die Erfindung jedoch auch Luftspinnmaschinen, mit deren Hilfe sogenanntes Vorgarn (andere Bezeichnung: Lunte) hergestellt werden kann. Diese Art Garn zeichnet sich dadurch aus, dass sie trotz einer gewissen Festigkeit, die ausreicht, um das Garn zu einer nachfolgenden Textilmaschine zu transportieren, noch immer verzugsfähig ist. Das Vorgarn kann also mit Hilfe einer Verzugseinrichtung, z. B. dem Streckwerk, einer das Vorgarn verarbeitenden Textilmaschine, beispielsweise einer Ringspinnmaschine, verzogen werden, bevor es endgültig versponnen wird.

Bei der Herstellung von Chemiefasern, beispielsweise Polyester, oder Gemischen aus Natur- und Chemiefasern entstehen Ablagerungen auf der Oberfläche des Garnbildungselements. Die Herstellung von Chemiefasern umfasst eine sogenannte Präparation der Endlosfasern während des Herstellungsprozesses. Dabei wird auf die Endlosfasern ein Präparationsmittel, meist Öle mit verschiedenartigen Zusätzen, aufgebracht, welches eine Behandlung, wie beispielsweise Strecken der Endlosfasern bei hohen Geschwindigkeiten, ermöglicht. Diese Präparationsmittel bleiben teilweise an den Chemiefasern auch in der weiteren Behandlung haften und führen in der Luftspinnmaschine zu Verunreinigungen. Die der Luftspinnmaschine in Form eines Faserverbandes zugeführten Fasern werden in der Regel durch ein Lieferwalzenpaar der Spinndüse zugeführt. Das Lieferwalzenpaar kann einem Ausgangswalzenpaar eines Streckwerks entsprechen. Zur Anwendung kommende Streckwerke dienen einer Verfeinerung des vorgelegten Faserverbandes vor dem Eintritt in die Spinndüse.

Im Eintrittsbereich der Spinndüse ist in der Regel ein Faserführungselement angeordnet, über welches der Faserverband in die Spinndüse und schließlich in den Bereich des Garnbildungselements geführt wird. Als Garnbildungselemente werden mehrheitlich Spindeln mit einem innenliegenden Abzugskanal verwendet. An der Spitze des Garnbildungselementes wird durch die Gehäusewandung der Spinndüse Druckluft derart eingebracht, dass sich die genannte rotierende Wirbelluftströmung ergibt. Dies führt dazu, dass aus dem das Faserführungselement verlassenden Faserverband einzelne aussenliegende Fasern abgetrennt und über die Spitze des Garnbildungselementes umgeschlagen werden. Im weiteren Verlauf rotieren diese herausgelösten Fasern auf der Oberfläche des Garnbildungselementes. In der Folge werden durch die Vorwärtsbewegung der innenliegenden Kernfasern des Faserverbandes die rotierenden Fasern um die Kernfasern gewunden und dadurch das Garn gebildet. Durch die Bewegung der einzelnen Fasern über die Oberfläche des Garnbildungselementes bilden sich auf dem Garnbildungselement jedoch auch Ablagerungen aufgrund der Anhaftungen an den Fasern aus dem Herstellungsprozess. Ablagerungen auf dem Garnbildungselement können auch durch beschädigte Fasern hervorgerufen werden. Ablagerungen können aus denselben Gründen auch auf der Oberfläche des Spinndüseninnenraumes oder des Faserführungselementes entstehen. Diese Anhaftungen führen zu einer Verschlechterung der Oberflächenbeschaffenheit des Garnbildungselementes und verursachen eine Verschlechterung der hergestellten Garnqualität. Eine regelmässige Reinigung der betroffenen Oberflächen ist daher notwendig, um eine gleichbleibende Qualität der gesponnen Garne aufrechterhalten zu können.

Die Reinigung der Oberflächen des Garnbildungselementes, des Spinndüseninnenraumes und des Faserführungselementes kann manuell durch einen periodischen Ausbau des Garnbildungselementes erfolgen, was jedoch zu einem nicht unerheblichen Wartungsaufwand, verbunden mit einem entsprechenden Betriebsausfall, führt.

Die EP 2 450 478 offenbart hingegen eine Vorrichtung, welche es erlaubt, eine automatische Reinigung ohne Stillsetzen der Maschine auszuführen. Zu diesem Zweck wird der für die Bildung der Wirbelluftströmung innerhalb der Spinndüse verwendeten Druckluft ein Additiv beigemischt. Das Additiv wird durch die Druckluft an das Garnbildungselement geführt und bewirkt eine Reinigung der Oberfläche des Garnbildungselementes. Nachteilig am offenbarten Reinigungssystem ist, dass für die Zuführung des Additivs eine zusätzliche Druckluftversorgung sämtlicher Spinnstellen der Luftspinnmaschine notwendig ist und bedingt dadurch eine aufwändige Regelung der Dosierung des Additivs vorzusehen ist, um eine Überdosierung des Additivs bei Stillstand einzelner Spinnstellen zu vermeiden. Ebenfalls muss das Additiv in eine Umgebung mit einem erhöhten Umgebungsdruck, nämlich die Druckluftversorgung der Spinndüse, eingespeist werden, was entsprechende Anforderungen an die Dosiervorrichtung zur Anpassung an einen momentan herrschenden Umgebungsdruck stellt.

Eine weitere Ausführung einer Reinigung des Garnbildungselementes offenbart die JP-2008-095-208. Ein Additiv wird ebenfalls der für die Verwirbelung in der Spinndüse verwendeten Druckluft zugeführt und mit dieser Druckluft in die Spinndüse und damit an das Garnbildungselement geführt. Die Dosierung und Zugabe des Additivs ist in der offenbarten Ausführung für jede Spinnstelle separat vorgesehen. Auch bei dieser Ausführung muss das Additiv in eine Umgebung mit einem erhöhten Umgebungsdruck eingespeist werden, was entsprechend hohe Anforderungen an die Dosiervorrichtung stellt.

Das gleiche Problem tritt prinzipiell auch auf, wenn Additiv dem Faserverband zugeführt werden soll, welches dazu dient, die Eigenschaften des daraus hergestellten Garns, beispielsweise im Hinblick auf dessen Haarigkeit, zu verbessern. Entsprechende Additive können dem Faserverband beispielsweise im Bereich des Faserführungselements zugegeben werden, wobei die Dosierung besonders genau regelbar sein sollte, um zu verhindern, dass auf einzelne Faserverbandabschnitte mehr oder weniger als die vorgegebenen Additivsollmenge aufgebracht wird.

Aufgabe der vorliegenden Erfindung ist es daher, eine Spinnstelle einer Luftspinnmaschine sowie ein Verfahren zum Betrieb einer Luftspinnmaschine vorzuschlagen, die eine besonders gleichbleibende und exakt zu regulierende Versorgung einer oder mehrerer Spinnstellen mit Additiv ermöglichen.

Die Aufgabe wird gelöst durch eine Luftspinnmaschine und ein Verfahren mit den Merkmalen der unabhängigen Patentansprüche.
Erfindungsgemäß zeichnet sich die Spinnstelle dadurch aus, dass ihr eine Additivversorgung zugeordnet ist, die ausgebildet ist, die Spinnstelle mit einem Additiv zu versorgen. Als Additiv können flüssige oder auch feste Substanzen (bzw. Mischungen derselben) zum Einsatz kommen, wobei Wasser oder eine wässrige Lösung bevorzugt wird. Die Additiv-Bevorratung ist abhängig von der Wahl des Additivs gestaltet und kann beispielsweise durch einen Tank, eine Verteilersystem oder der Spinnstelle zugeordnete Vorratspatronen gebildet sein. Zudem sind eine oder mehrere Additivversorgungsleitungen vorgesehen, über die die Additiv-Bevorratung mit einer Additivabgabe in Verbindung steht, wobei letztere beispielsweise durch eine Hohlnadel, einen Spraykopf oder einen Auslassbereich eines Kanalabschnitts gebildet sein kann. Über die Additivabgabe wird das Additiv schließlich in die Spinndüse eingebracht oder auf den Faserverband aufgebracht.
In jedem Fall umfasst die Additivversorgung wenigstens ein Ventil, mit dessen Hilfe der Volumen- und/oder Massenstrom des Additivs regulierbar ist, so dass die Menge des auf den Faserverband oder in die Spinndüse eingebrachten Additivs regulierbar und damit auf das jeweilige Additiv bzw. das zu verarbeitende Fasermaterial einstellbar ist.
Der Kern der Erfindung liegt nun darin, dass das Ventil im Betrieb desselben wenigstens einmal pro Sekunde geöffnet und geschlossen wird, so dass das dem Ventil zugeführte Additiv das Ventil pulsartig verlässt. Im Gegensatz zu herkömmlichen Ventilen wird das erfindungsgemäße Ventil also nicht kontinuierlich von Additiv durchströmt. Vielmehr ist vorgesehen, dass sich der Additivstrom aus einer Vielzahl von kleinsten Tröpfchen bzw. Additiveinheiten (falls keinen Flüssigkeit, sondern ein Gas oder ein Feststoff zum Einsatz kommt) zusammensetzt, die durch das schnelle Öffnen und Schließen erzeugt werden und das Ventil verlassen. Wird das Ventil dabei ein bis mehrere Male pro Sekunde geöffnet und geschlossen, so wird ein Additivstrom erzeugt, der im Ergebnis einem kontinuierlichen Additivstrom gleichkommt, auch wenn er in Wirklichkeit aus einer Vielzahl von Einzeltröpfchen bzw. - einheiten besteht, die das Ventil dicht hintereinander verlassen. Dadurch, dass das Volumen bzw. die Masse eines Tröpfchens bzw. einer Einheit äußerst gering ist und die Schaltfrequenz des Ventils (d. h. die Anzahl der Öffnungs- und Schließvorgänge pro Sekunde) äußerst genau einstellbar ist, ist auch die Menge des auf den Faserverband aufgebrachten bzw. in die Spinndüse (insbesondere die Wirbelkammer) eingebrachten Additivs äußerst genau und reproduzierbar regulierbar. Ein weiterer Vorteil liegt in der Tatsache, dass das Ventil, sobald es in seiner Schließstellung verbleibt, sofort vollständig schließt. Kommt ein flüssiges Additiv zum Einsatz, ist ein Nachtropfen aufgrund des geringen Volumens der Einzeltröpfchen ausgeschlossen.

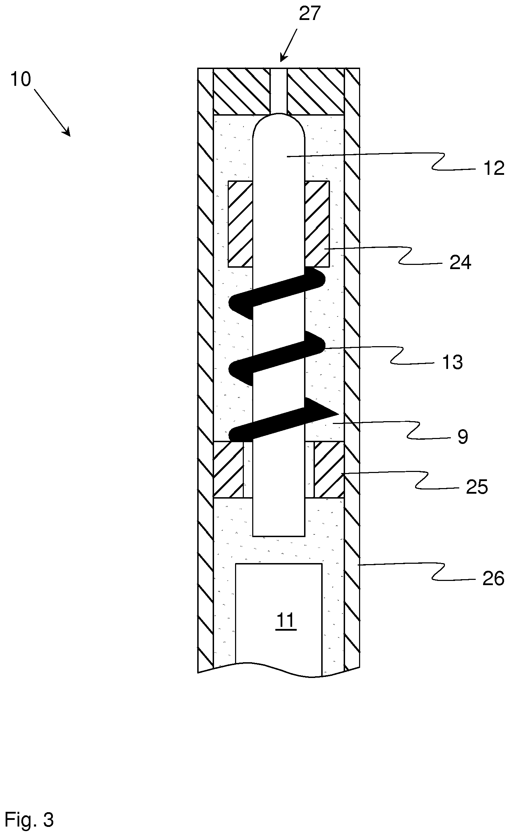

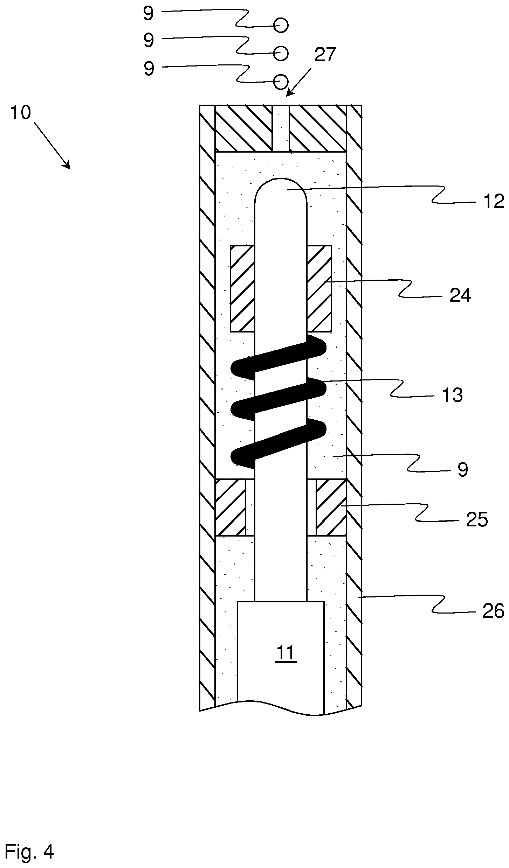

Bei dem Ventil kann es sich beispielsweise um ein Ventil handeln, welches eine Additivöffnung und ein diese Öffnung in der Schließstellung des Ventils verschließendes Schließelement umfasst. Das Schließelement kann mit Hilfe eines Elektromagneten zwischen einer Offen- und Schließstellung hin- und her bewegt werden. Alternativ wäre ebenso möglich, dass das Schließelement mit Hilfe eines mechanischen Kraftspeichers (z. B. einer Feder) in seiner Schließstellung (alternativ: in seiner Offenstellung) gehalten wird und mit Hilfe des Elektromagneten in seine Offenstellung (alternativ: in seine Schließstellung) verbracht wird. Ein entsprechendes Ventil ist in den Figuren 3 und 4 näher dargestellt, wobei die einzelnen Merkmale im Rahmen der vorliegenden Erfindung verwirklicht werden können.

Vorteilhaft ist es, wenn die Frequenz, mit der das Ventil während seines Betriebs geöffnet und wieder geschlossen wird, einen Betrag aufweist, der maximal 100 Hz, bevorzugt maximal 25 Hz, besonders bevorzugt maximal 10 Hz, beträgt. Insbesondere sind in Abhängigkeit des eingesetzten Additivs bzw. dessen Zähflüssigkeit sowie des auf das Additiv vor dem Ventil wirkenden Drucks Werte sinnvoll, die im einstelligen bzw. unteren zweistelligen Hz-Bereich liegen, wobei die Frequenz während des Betriebs der Spinnstelle auch variiert werden kann, um den Volumenstrom bzw. Massenstrom des der Spinnstelle zugeführten Additivs anpassen zu können. Beispielsweise wäre es sinnvoll, die Frequenz während eines Reinigungsbetriebs, während dessen das Additiv der Reinigung der Spinndüse dient, gegenüber einer Frequenz zu erhöhen, die während des Normalbetriebs gewählt wird, bei dem das Additiv vorrangig dazu dient, die Eigenschaften des fertigen Garns zu verbessern.

Besondere Vorteile bringt es mit sich, wenn das Ventil in eine Additivversorgungsleitung der Spinnstelle integriert ist, die zumindest einen Additivspeicher mit der Spinnstelle verbindet. Der Additivspeicher enthält das Additiv und kann beispielsweise mit einer Druckluftquelle in Verbindung stehen, so dass das Additiv aufgrund des gegenüber dem in der Wirbelkammer vorherrschenden Drucks erhöhten Innendrucks des Additivspeichers in den Bereich der entsprechenden Spinndüse strömt. Die Additivversorgungsleitung kann direkt zwischen dem Additivspeicher und der oben genannten Additivabgabe der Spinnstelle verlaufen, wobei den einzelnen Spinnstellen jeweils ein eigener Additivspeicher zugeordnet sein kann. Ebenso können mehrere oder alle Spinnstellen einer Luftspinnmaschine mit einem gemeinsamen Additivspeicher in Fluidverbindung stehen. In diesem Zusammenhang ist es von Vorteil, wenn der Additivspeicher mit einer Hauptversorgungsleitung in Verbindung steht, von dem die einzelnen, den jeweiligen Spinnstellen zugeordneten, Additivversorgungsleitungen abzweigen. Hierbei ist es denkbar, dass jede Additivversorgungsleitung ein eigenes Ventil umfasst. Ebenso wäre es möglich, die Hauptversorgungsleitung mit einem entsprechenden Ventil auszurüsten.

Besonders vorteilhaft ist es, wenn das Ventil im Bereich der Spinndüse angeordnet und/oder an einem Träger der Spinnstelle fixiert ist. Beispielsweise wäre es denkbar, das bzw. die Ventil(e) an einem Rahmenelement der Luftspinnmaschine zu befestigen und mit Hilfe einer, vorzugsweise flexiblen, Additivversorgungsleitung mit der Additivabgabe zu verbinden.

Auch ist es von Vorteil, wenn die Luftspinnmaschine mehrere Spinnstellen umfasst, wobei jeder Spinnstelle wenigstens ein eigenes Ventil zugeordnet ist. Hierdurch lässt sich der Volumen- bzw. Massenstrom des Additivs an jeder Spinnstelle separat regulieren. Alternativ wäre es auch denkbar, mehrere Spinnstellen mit einem gemeinsamen Ventil zu verbinden, wobei in diesem Fall mehrere zu den jeweiligen Spinndüsen führende Additivversorgungsleitungen mit dem Ventil in Fluidverbindung stehen sollten.

Ebenso ist es vorteilhaft, wenn alle Ventile der Luftspinnmaschine beziehungsweise einzelne Gruppen von Ventilen mit einem oder mehreren gemeinsamen Additivspeichern in Verbindung stehen. Beispielsweise könnte die Luftspinnmaschine zwei gegenüberliegende Spinnstellenreihen umfassen, wobei jede Reihe mit einem gemeinsamen Additivspeicher in Verbindung stehen könnte. Alternativ hierzu können selbstverständlich auch alle Spinnstellen mit nur einem Additivspeicher in Verbindung stehen, so dass der Additivspeicher zentral platziert und einfach nachfüllbar wäre.

Das erfindungsgemäße Verfahren zeichnet sich dadurch aus, dass der Spinnstelle während des Betriebs der Luftspinnmaschine zumindest zeitweise ein Additiv mit Hilfe einer Additivversorgung zugeführt wird, wobei der Volumen- und/oder Massenstrom des Additivs mit Hilfe wenigstens eines Ventil reguliert wird, und wobei das Ventil im Betrieb desselben mehrmals pro Sekunde geöffnet und geschlossen wird, so dass das dem Ventil zugeführte Additiv das Ventil pulsartig verlässt. Wie bereits in der bisherigen Beschreibung ausgeführt, hat die pulsartige Wirkweise des Ventils den Vorteil, dass das Additiv der Spinnstelle äußerst gleichmäßig, fein dosiert und reproduzierbar zugeführt werden kann. Im Ergebnis wird das Additiv bei aktivem Ventil der jeweiligen Additivabgabe kontinuierlich zugeführt, auch wenn sich der Additivstrom aus mehreren kleinsten Additivtröpfchen bzw. Additiveinheiten (falls anstelle von Flüssigkeit ein Gas oder ein Feststoff zum Einsatz kommt) zusammensetzt.

Vorteilhaft ist es, wenn das Additiv auf den Faserverband aufgebracht und/oder in die Spinndüse eingebracht wird. Beispielsweise ist es denkbar, dass das Additiv außerhalb der Spinndüse oder im Bereich des Faserführungselements auf den Faserverband aufgebracht und gemeinsam mit diesem in die Wirbelkammer der Spinndüse eingebracht wird. Das Additiv dient je nach Volumen- bzw. Massenstrom entweder der Verbesserung der Eigenschaften des aus dem Faserverband hergestellten Garns oder der Reinigung des Garnbildungselements bzw. der Wirbelkammer, wobei der Faserverband in diesem Fall die Reinigung durch mechanischen Kontakt mit den jeweiligen Oberflächen. des Garnbildungselements unterstützt. Selbstverständlich kann die oben genannte Additivabgabe auch direkt in die Wirbelkammer münden, um das Additiv unabhängig vom Faserverband in diese einbringen zu können.

In jedem Fall ist es von Vorteil, wenn als Additiv ein Gas und/oder eine Flüssigkeit, insbesondere Wasser oder eine Wasser enthaltende Flüssigkeit (z. B. eine Reinigungslösung), und/oder ein Feststoff Verwendung findet. Insbesondere, wenn beispielsweise Wasser oder eine Wasser enthaltende Flüssigkeit im Bereich des Faserführungselements der entsprechenden Spinndüse auf den Faserverband aufgebracht oder in die Spinndüse eingebracht wird, wird die Garnqualität im Hinblick auf die Haarigkeit und die Festigkeit, Dehnung und Gleichmässigkeit des Garns deutlich verbessert. Dadurch lassen sich auch höhere Produktionsgeschwindigkeiten fahren, sodass die Luftspinnmaschine auch wirtschaftlicher produzieren und Energie eingespart werden kann.

Besonders vorteilhaft ist es, wenn das Ventil während seines Betriebs mit einer Frequenz von maximal 100 Hz, bevorzugt mit einer Frequenz von maximal 25 Hz, besonders bevorzugt mit einer Frequenz von maximal 10 Hz geöffnet und wieder geschlossen wird. Die Frequenz sollte vorzugsweise in Abhängigkeit der Eigenschaften des der Spinnstelle zugeführten Faserverbands und/oder der Abzugsgeschwindigkeit des hieraus hergestellten Garns gewählt werden. Insbesondere sollte hierbei das oben beschriebene Ventil zum Einsatz kommen, bei dem die Bewegung des Schließelements mit Hilfe eines Elektromagneten und gegebenenfalls eines mechanischen Kraftspeichers bewirkt wird. Die Frequenz entsprechender Elektromagneten (d. h. die Überführung zwischen dessen aktiven und passiven Zustand) kann entsprechend hoch gewählt werden, wobei eine besonders genaue Regelung der Frequenz mit Hilfe einer entsprechenden Steuerung möglich ist.

Ebenso ist es vorteilhaft, wenn die Frequenz während des Betriebs des Ventils in Abhängigkeit definierter Vorgaben geändert wird. Beispielsweise wäre es denkbar, die Frequenz während eines Reinigungsbetriebs der entsprechenden Spinnstelle zu erhöhen, um den Volumen- bzw. Massenstrom des Additivs zu erhöhen. Das Additiv bewirkt in diesem Betrieb eine Reinigung insbesondere des Innenraums der Wirbelkammer bzw. des Garnbildungselements. Hierzu wird das Additiv beispielsweise auf den Faserverband aufgebracht oder ins Innere der Wirbelkammer eindosiert. Durch das Zusammenspiel des Additivs mit dem sich in die Spinndüse bewegenden Faserverband erfolgt schließlich eine Reinigung der genannten Bereiche, wobei der Volumen- bzw. Massenstrom des Additivs in diesem Fall höher sein sollte als während des normalen Spinnbetriebs, da hier lediglich der Faserverband mit einer geringen Menge des Additivs benetzt werden sollte, um die genannten Garneigenschaften positiv zu beeinflussen.

In jedem Fall bringt es Vorteile mit sich, wenn der Volumenstrom des zugeführten Additivs zumindest zeitweise einen Betrag zwischen 0,01 ml/min und 7,0 ml/min, bevorzugt zwischen 0,02 ml/min und 5,0 ml/min, besonders bevorzugt zwischen 0,05 und 3,0 ml/min, aufweist und/oder wenn der Massenstrom des zugeführten Additivs zumindest zeitweise einen Betrag zwischen 0,01 g/min und 7,0 g/min, bevorzugt zwischen 0,02 g/min und 5,0 g/min, besonders bevorzugt zwischen 0,05 g/min und 3,0 g/min, aufweist. Während höhere Werte eine Reinigung der genannten Bereiche der Spinnstelle erlauben, sind kleinere Werte im Normalbetrieb von Vorteil, in dem das Additiv lediglich der Verbesserung der Garneigenschaften dient. Das Ventil sollte daher einen Volumen- bzw. Massenstrom über die genannten Spannbreiten erlauben, um die einzelnen Spinnstellen sowohl im Normalbetrieb als auch im Reinigungsbetrieb betreiben zu können.

Vorteilhaft ist es in diesem Zusammenhang, wenn der Volumenstrom (bzw. Massenstrom) des zugeführten Additivs während des Normalbetriebs der Luftspinnmaschine einen Betrag zwischen 0,01 ml/min (bzw. g/min) und 1,5 ml/min (bzw. g/min), bevorzugt zwischen 0,01 ml/min (bzw. g/min) und 1,0 ml/min (bzw. g/min) aufweist, und wenn der Volumenstrom (bzw. Massenstrom) des zugeführten Additivs während eines Reinigungsbetriebs der Luftspinnmaschine einen Betrag zwischen 2,0 ml/min (bzw. g/min) und 7,0 ml/min (bzw. g/min), bevorzugt zwischen 3,0 ml/min (bzw. g/min) und 7,0 ml/min (bzw. g/min), aufweist.

Der genaue Wert kann in Abhängigkeit der Eigenschaften des Faserverbands und/oder dessen Zuführgeschwindigkeit in die Spinnstelle und/oder der Abzugsgeschwindigkeit des Garns aus der Spinnstelle gewählt werden und kann daher je nach Anwendungsfall schwanken. Ebenso kann der Wert in Abhängigkeit der Dauer des Reinigungsbetriebs bzw. der Dauer des Normalbetriebs zwischen zwei Reinigungsabschnitten gewählt werden.

Besonders vorteilhaft ist es, wenn die Regulierung des Volumenstroms beziehungsweise des Massenstroms des zugeführten Additivs durch Änderung der Schaltfrequenz (d. h. der Anzahl der Öffnungs- und Schließvorgänge pro Sekunde) des Ventils erfolgt. Dies ist insbesondere dann von Vorteil, wenn ein Ventil zum Einsatz kommt, das bei jedem Öffnungsvorgang stets dieselbe Menge an Additiv freigibt, so dass der Volumen- bzw. Massenstrom des das Ventil verlassenden Additivs bei ansonsten gleichbleibendem Druck des Additivs ausschließlich von der genannten Frequenz abhängt. Selbstverständlich kann neben der oder alternativ zur Frequenz auch der Druck des in das Ventil eingespeisten Additivs variiert werden. Dies kann beispielsweise durch Änderung des Drucks innerhalb des das Additiv bereitstellenden Additivspeichers oder durch Änderung des Drucks, der von einer das Additiv liefernden Pumpe erzeugt wird, realisiert werden, wobei in diesem Fall die Schaltfrequenz konstant bleiben könnte. Der absolute Additivdruck im Bereich eines Additiveinlasses des Ventils sollte im Übrigen zwischen 1,5 bar und 7 bar liegen.In jedem Fall sollte der genannte Druck und die Frequenz derart aufeinander abgestimmt werden, dass sich die oben genannten Volumen- bzw. Massenströme ergeben.

Weitere Vorteile der Erfindung sind in den nachfolgenden Ausführungsbeispielen beschrieben. Es zeigen:
- **Figur 1**: einen Ausschnitt einer erfindungsgemäßen Spinnstelle,
- **Figur 2**: eine alternative Ausführung einer erfindungsgemäßen Spinnstelle,
- **Figur 3**: eine Ausführungsform eines erfindungsgemäßen Ventils in seiner Schließstellung, und
- **Figur 4**: das in Figur 3 gezeigte Ventil in seiner Offenstellung.

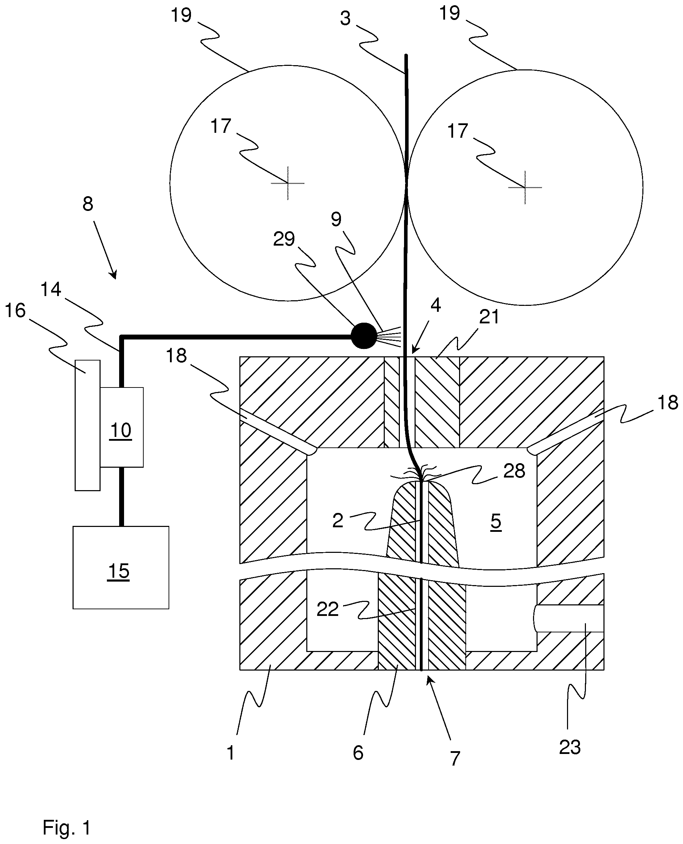

Figur 1 zeigt einen Ausschnitt einer erfindungsgemäßen Spinnstelle einer Luftspinnmaschine (wobei die Luftspinnmaschine selbstverständlich eine Vielzahl von, vorzugsweise benachbart zueinander angeordnete, Spinnstellen aufweisen kann). Die Luftspinnmaschine kann bei Bedarf ein Streckwerk umfassen, welches mit einem Faserverband 3, beispielsweise in Form eines doublierten Streckenbands, beliefert wird. Ferner umfasst die gezeigte Spinnstelle eine Spinndüse 1 mit einer innenliegenden Wirbelkammer 5, in welcher der Faserverband 3 bzw. mindestens ein Teil der Fasern des Faserverbands 3 nach Passieren eines Einlasses 4 der Spinndüse 1 mit einer Drehung versehen wird (die genaue Wirkungsweise der Spinnstelle wird im Folgenden noch näher beschrieben).

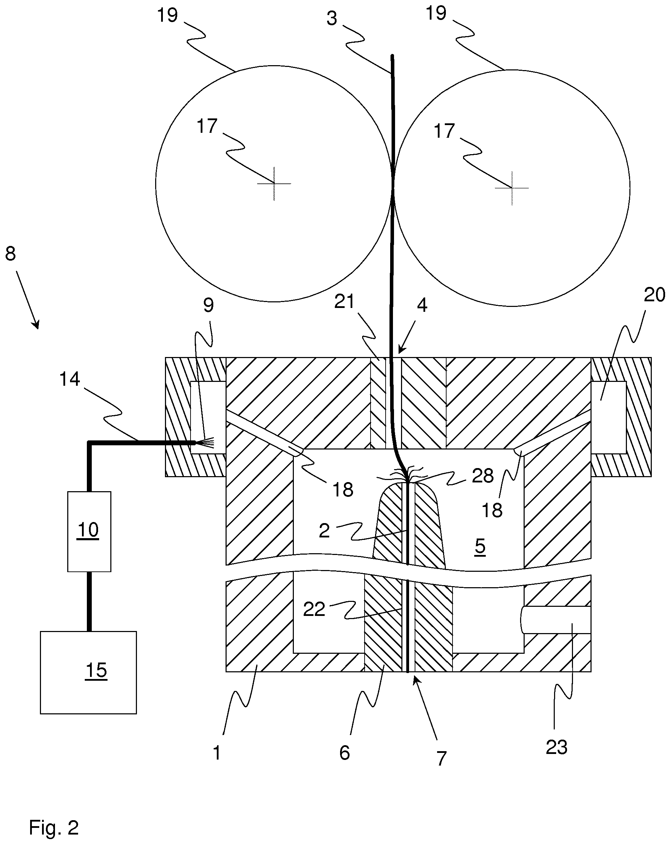

Darüber hinaus kann die Luftspinnmaschine ein der Spinndüse 1 nachgeordnetes (nicht gezeigtes) Abzugswalzenpaar sowie eine dem Abzugswalzenpaar nachgeschaltete Aufwindevorrichtung (ebenfalls nicht gezeigt) mit einer Hülse zum Aufwinden des die Spinnstelle verlassenden Garns 2 umfassen. Die erfindungsgemäße Spinnstelle muss nicht zwangsweise ein Streckwerk aufweisen, deren ausgangsseitigen und um jeweils eine Drehachse 17 drehbaren Lieferwalzen 19 in den Figuren 1 und 2 dargestellt sind. Auch ist das Abzugswalzenpaar nicht zwingend notwendig.

Die gezeigte Spinnstelle arbeitet generell nach einem Luftspinnverfahren. Zur Bildung des Garns 2 wird der Faserverband 3 über ein, mit einer den genannten Einlass 4 bildenden Eintrittsöffnung versehenes, Faserführungselement 21 in die Wirbelkammer 5 der Spinndüse 1 geführt. Dort erhält es eine Drehung, d. h. mindestens ein Teil der freien Faserenden des Faserverbands 3 wird von einer Wirbelluftströmung, die durch entsprechend in einer die Wirbelkammer 5 umgebenden Wirbelkammerwandung angeordnete Luftdüsen 18 erzeugt wird, erfasst. Ein Teil der Fasern wird hierbei aus dem Faserverband 3 zumindest ein Stück weit herausgezogen und um die Spitze eines in die Wirbelkammer 5 ragenden Garnbildungselements 6 gewunden. Dadurch, dass der Faserverband 3 durch eine Einlassmündung 28 des Garnbildungselements 6 über einen innerhalb des Garnbildungselements 6 angeordneten Abzugskanal 22 aus der Wirbelkammer 5 und schließlich über einen Auslass 7 aus der Spinndüse 1 abgezogen wird, werden schließlich auch die freien Faserenden in Richtung der Einlassmündung 28 gezogen und schlingen sich dabei als sogenannte Umwindefasern um die zentral verlaufenden Kernfasern - resultierend in einem die gewünschte Drehung aufweisenden Garn 2. Die über die Luftdüsen 18 eingebrachte Druckluft verlässt die Spinndüse 1 schließlich über den Abzugskanal 22 sowie einen eventuell vorhandene Luftaustrittskanal 23, der bei Bedarf mit einer Unterdruckquelle verbunden sein kann.

Generell sei an dieser Stelle klargestellt, dass es sich bei dem hergestellten Garn 2 grundsätzlich um einen beliebigen Faserverband 3 handeln kann, der sich dadurch auszeichnet, dass ein außenliegender Teil der Fasern (sogenannte Umwindefasern) um einen inneren, vorzugsweise ungedrehten oder bei Bedarf ebenfalls gedrehten Teil der Fasern, herumgeschlungen ist, um dem Garn 2 die gewünschte Festigkeit zu verleihen. Umfasst ist von der Erfindung also auch eine Luftspinnmaschine, mit deren Hilfe sich sogenanntes Vorgarn herstellen lässt. Bei Vorgarn handelt es sich um ein Garn 2 mit einem relativ geringen Anteil an Umwindefasern, bzw. um ein Garn 2, bei dem die Umwindefasern relativ locker um den inneren Kern geschlungen sind, so dass das Garn 2 verzugsfähig bleibt. Dies ist dann entscheidend, wenn das hergestellte Garn 2 an einer nachfolgenden Textilmaschine (beispielsweise einer Ringspinnmaschine) nochmals mit Hilfe eines Streckwerks verzogen werden soll bzw. muss, um entsprechend weiterverarbeitet werden zu können.

Im Hinblick auf die Luftdüsen 18 sei an dieser Stelle zudem rein vorsorglich erwähnt, dass diese in der Regel so ausgerichtet sein sollten, dass die austretenden Luftstrahlen gleichgerichtet sind, um gemeinsam eine gleichgerichtete Luftströmung mit einem Drehsinn zu erzeugen. Vorzugsweise sind die einzelnen Luftdüsen 18 hierbei rotationssymmetrisch zueinander angeordnet und münden tangential in die Wirbelkammer 5.

Erfindungsgemäß ist der Spinnstelle nun eine Additivversorgung 8 zugeordnet, die ein oder mehrere Additivspeicher 15 sowie eine oder mehrerer, vorzugsweise zumindest teilweise flexible, Additivversorgungsleitungen 14 umfasst, über die der jeweilige Additivspeicher 15 mit einer im Bereich der oder innerhalb der Spinndüse 1 angeordneten Additivabgabe 29 in Fluidverbindung steht (hinsichtlich möglicher Additive 9 wird auf die bisherige Beschreibung verwiesen).

Wie ein Vergleich der Figuren 1 und 2 zeigt, kann das Additiv 9 an unterschiedlicher Stelle abgegeben werden. Während in Figur 1 eine Ausführungsform gezeigt ist, bei der sich die Additivabgabe 29 im Bereich des Einlasses 4 der Spinndüse 1 befindet (so dass das Additiv 9 auf den Faserverband 3 aufgebracht werden kann), kann das Additiv 9 in der in Figur 2 gezeigten Ausführung der Spinnluft zugegeben werden. Der Eintrag des Additivs 9 erfolgt hierbei beispielsweise über einen Luftversortungskanal 20, der beispielsweise ringförmig um die die Wirbelkammer 5 begrenzende Wandung verläuft und über die die Luftdüsen 18 mit Druckluft versorgt werden.

Um das Additiv 9 genau und zudem äußerst reproduzierbar über die Additivabgabe 29 abgeben zu können und darüber hinaus den abgegebenen Volumen- bzw. Massenstrom des Additivs 9 auf die jeweiligen Gegebenheiten anpassen zu können, umfasst die Additivversorgung 8 darüber hinaus zumindest ein Ventil 10, das vorzugsweise in die entsprechende Additivversorgungsleitung 14 integriert ist und damit vom Additiv 9 durchströmt wird.

Das Ventil 10 ist beispielsweise im Bereich der Spinndüse 1 an einem Träger 16 der Luftspinnmaschine (z. B. einem Rahmenabschnitt derselben) fixiert und zeichnet sich dadurch aus, dass es im Betrieb wenigstens einmal pro Sekunde geöffnet und geschlossen wird, so dass das Additiv 9 das Ventil 10 nicht als durchgängiger Strahl, sondern vielmehr in Form einzelner Einheiten (z. B. in Form von einzelnen Tröpfchen) pulsartig verlässt. Verwiesen wird in diesem Zusammenhang auf die bisherige Beschreibung, in der die Vorteile einer entsprechenden Ventilsteuerung genannt sind.

Alternativ könnte das Ventil 10 selbstverständlich auch direkt im Bereich der Additivabgabe 29 platziert sein oder diese bilden, so dass das Additiv 9 nach Verlassen des Ventils 10 nicht erneut durch einen Teil der Additivversorgungsleitung 14 befördert werden müsste.

Eine mögliche Ausführung eines erfindungsgemäß zum Einsatz kommenden Ventils 10 zeigen die Figuren 3 (Schließstellung) und 4 (Offenstellung).

Das Ventil 10 umfasst prinzipiell ein Gehäuse 26, das (bezogen auf die Figuren) von unten mit einem Additiv 9 versorgt wird, wobei das Additiv 9 aus einem unter Druck stehenden Additivspeicher 15 bzw. einer mit einer Pumpe mit Additiv 9 versorgten Leitung stammen kann, der bzw. die mit dem Ventil 10 über einen Abschnitt einer Additivversorgungsleitung 14 in Fluidverbindung steht.

Ferner umfasst das Ventil 10 einen Additivauslass 27, über den das Additiv 9 in der Offenstellung (Figur 4) aus dem Ventil 10 austreten und beispielweise durch eine nicht gezeigte Additivversorgungsleitung 14 der Spinndüse 1 zugeführt werden kann.

Um den Additivauslass 27 verschließen zu können, ist ferner ein Schließelement 12 vorhanden, welches mit Hilfe eines mechanischen Kraftspeichers, beispielsweise des gezeigten Federelements 13, in der in Figur 3 gezeigten Stellung gehalten wird und dabei den Additivauslass 27 verschließt. Das Federelement 13 ist vorzugsweise zwischen einem am Gehäuse 26 starr fixierten Anschlag 25 und einer mit dem Schließelement 12 verbundenen Anlagefläche 24 angeordnet, um das Schließelement 12 mit einer in Richtung des Additivauslasses 27 wirkenden Kraft zu beaufschlagen.

Wird der gezeigte Elektromagnet 11 aktiviert, so zieht dieser das Schließelement 12 entgegen der vom Kraftspeicher erzeugten Kraft in die in Figur 4 gezeigte Stellung. Wird der Elektromagnet 11 abwechselnd aktiviert und deaktiviert, so wechselt das Schließelement 12 zwischen den in den Figuren 3 und 4 gezeigten Stellungen und gibt dabei pulsartig Additiv 9 frei. Je nach Schaltfrequenz des Ventils 10 und des am Ventil 10 anliegenden Druck des Additivs 9 entsteht schließlich ein pulsartiger Additivstrom, dessen Volumen- bzw. Massenstrom sehr exakt reguliert werden kann.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind, vorausgesetzt, dass die Abwandlungen nicht gegen die Lehre der unabhängigen Patentansprüche verstoßen.

### Bezuaszeichenliste

- 1.: Spinndüse
- 2.: Garn
- 3.: Faserverband
- 4.: Einlass
- 5.: Wirbelkammer
- 6.: Garnbildungselement
- 7.: Auslass
- 8.: Additivversorgung
- 9.: Additiv
- 10.: Ventil
- 11.: Elektromagnet
- 12.: Schließelement
- 13.: Federelement
- 14.: Additivversorgungsleitung
- 15.: Additivspeicher
- 16.: Träger
- 17.: Drehachse
- 18.: Luftdüse
- 19.: Lieferwalze
- 20.: Luftversorgungskanal
- 21.: Faserführungselement
- 22.: Abzugskanal
- 23.: Luftaustrittskanal
- 24.: Anlagefläche
- 25.: Anschlag
- 26.: Gehäuse
- 27.: Additivauslass
- 28.: Einlassmündung
- 29.: Additivabgabe

## Patentansprüche

1. Luftspinnmaschine umfassend eine Spinnstelle
- mit einer Spinndüse (1), die der Herstellung eines Garns (2) aus einem der Spinndüse (1) zugeführten Faserverband (3) dient,
- wobei die Spinndüse (1) einen Einlass (4) für den Faserverband (3),
- eine innenliegende Wirbelkammer (5),
- ein in die Wirbelkammer (5) ragendes Garnbildungselement (6) sowie
- einen Auslass (7) für das im Inneren der Wirbelkammer (5) erzeugte Garn (2) aufweist,
- wobei der Spinnstelle eine Additivversorgung (8) zugeordnet ist, die ausgebildet ist, die Spinnstelle mit einem Additiv (9) zu versorgen, und
- wobei die Additivversorgung (8) wenigstens ein Ventil (10) umfasst, mit dessen Hilfe der Volumen- und/oder Massenstrom des Additivs (9) regulierbar ist,
**dadurch gekennzeichnet, dass**
das Ventil (10) im Betrieb desselben wenigstens einmal pro Sekunde geöffnet und geschlossen wird, so dass das dem Ventil (10) zugeführte Additiv (9) das Ventil (10) pulsartig verlässt.

2. Luftspinnmaschine gemäß dem vorangegangenen Anspruch, **dadurch gekennzeichnet, dass** die Frequenz, mit der das Ventil (10) während seines Betriebs geöffnet und wieder geschlossen wird, einen Betrag aufweist, der maximal 100 Hz, bevorzugt maximal 25 Hz, besonders bevorzugt maximal 10 Hz, beträgt.

3. Luftspinnmaschine gemäß einem der vorangegangenen Ansprüche, **dadurch gekennzeichnet, dass** das Ventil (10) in eine Additivversorgungsleitung (14) der Spinnstelle integriert ist, die zumindest einen Additivspeicher (15) mit der Spinnstelle verbindet.

4. Luftspinnmaschine gemäß einem der vorangegangenen Ansprüche, **dadurch gekennzeichnet, dass** das Ventil (10) im Bereich der Spinndüse (1) angeordnet und/oder an einem Träger (16) der Spinnstelle fixiert ist.

5. Luftspinnmaschine gemäß einem der vorangegangenen Ansprüche, **dadurch gekennzeichnet, dass** die Luftspinnmaschine mehrere Spinnstellen umfasst, wobei jeder Spinnstelle wenigstens ein eigenes Ventil (10) zugeordnet ist.

6. Luftspinnmaschine gemäß einem der vorangegangenen Ansprüche, **dadurch gekennzeichnet, dass** alle Ventile (10) der Luftspinnmaschine bzw. einzelne Gruppen von Ventilen (10) mit einem oder mehreren gemeinsamen Additivspeichern (15) in Verbindung stehen.

7. Verfahren zum Betrieb einer Luftspinnmaschine,
- wobei die Luftspinnmaschine wenigstens eine Spinnstelle aufweist,
- wobei die Spinnstelle zumindest eine Spinndüse (1) aufweist,
- wobei der Spinndüse (1) während des Betriebs der Spinnstelle ein Faserverband (3) über einen Einlass (4) zugeführt wird,
- wobei der Faserverband (3) innerhalb einer Wirbelkammer (5) der Spinndüse (1) eine Drehung erhält, so dass aus dem Faserverband (3) ein Garn (2) gebildet wird, das die Spinnstelle schließlich über einen Auslass (7) verlässt,
- wobei der Spinnstelle während des Betriebs der Luftspinnmaschine zumindest zeitweise ein Additiv (9) mit Hilfe einer Additivversorgung (8) zugeführt wird, und
- wobei der Volumen- und/oder Massenstrom des Additivs (9) mit Hilfe wenigstens eines Ventils (10) reguliert wird,
**dadurch gekennzeichnet,**
**dass** das Ventil (10) im Betrieb desselben wenigstens einmal pro Sekunde geöffnet und geschlossen wird, so dass das dem Ventil (10) zugeführte Additiv (9) das Ventil (10) pulsartig verlässt.

8. Verfahren gemäß dem vorangegangenen Anspruch, **dadurch gekennzeichnet, dass** das Additiv (9) auf den Faserverband (3) aufgebracht und/oder in die Spinndüse (1) eingebracht wird.

9. Verfahren gemäß Anspruch 7 oder 8, **dadurch gekennzeichnet, dass** als Additiv (9) ein Gas und/oder eine Flüssigkeit, insbesondere Wasser oder eine Wasser enthaltende Flüssigkeit, und/oder ein Feststoff Verwendung findet.

10. Verfahren gemäß einem der Ansprüche 7 bis 9, **dadurch gekennzeichnet, dass** das Ventil (10) während seines Betriebs mit einer Frequenz von maximal 100 Hz, bevorzugt mit einer Frequenz von maximal 25 Hz, besonders bevorzugt mit einer Frequenz von maximal 10 Hz, geöffnet und wieder geschlossen wird.

11. Verfahren gemäß dem vorangegangenen Anspruch, **dadurch gekennzeichnet, dass** die Frequenz während des Betriebs des Ventils (10) in Abhängigkeit definierter Vorgaben geändert wird.

12. Verfahren gemäß einem der Ansprüche 7 bis 11, **dadurch gekennzeichnet, dass** der Volumenstrom des zugeführten Additivs (9) zumindest zeitweise einen Betrag zwischen 0,01 ml/min und 7,0 ml/min, bevorzugt zwischen 0,02 ml/min und 5,0 ml/min, besonders bevorzugt zwischen 0,05 und 3,0 ml/min, aufweist und/oder dass der Massenstrom des zugeführten Additivs (9) zumindest zeitweise einen Betrag zwischen 0,01 g/min und 7,0 g/min, bevorzugt zwischen 0,02 g/min und 5,0 g/min, besonders bevorzugt zwischen 0,05 g/min und 3,0 g/min, aufweist.

13. Verfahren gemäß einem der Ansprüche 7 bis 12, **dadurch gekennzeichnet, dass** der Volumenstrom des zugeführten Additivs (9) während eines Normalbetriebs der Luftspinnmaschine einen Betrag zwischen 0,01 ml/min und 1,5 ml/min, bevorzugt zwischen 0,01 ml/min und 1,0 ml/min aufweist, und dass der Volumenstrom des zugeführten Additivs (9) während eines Reinigungsbetriebs der Luftspinnmaschine einen Betrag zwischen 2,0 ml/min und 7,0 ml/min, bevorzugt zwischen 3,0 ml/min und 7,0 ml/min, aufweist.

14. Verfahren gemäß einem der Ansprüche 7 bis 13, **dadurch gekennzeichnet, dass** der Massenstrom des zugeführten Additivs (9) während eines Normalbetriebs der Luftspinnmaschine einen Betrag zwischen 0,01 g/min und 1,5 g/min, bevorzugt zwischen 0,01 g/min und 1,0 g/min aufweist, und dass der Massenstrom des zugeführten Additivs (9) während eines Reinigungsbetriebs der Luftspinnmaschine einen Betrag zwischen 2,0 g/min und 7,0 g/min, bevorzugt zwischen 3,0 g/min und 7,0 g/min, aufweist.

15. Verfahren gemäß einem der Ansprüche 7 bis 14, **dadurch gekennzeichnet, dass** die Regulierung des Volumenstroms bzw. des Massenstroms des zugeführten Additivs (9) durch Änderung der in Anspruch 10 genannten Frequenz und/oder durch Änderung des Drucks des in das Ventil (10) eingespeisten Additivs (9) erfolgt.

## Claims

1. Air jet spinning machine comprising a spinning unit
- with a spinning nozzle (1), which serves the purpose of producing a yarn (2) from a fiber composite (3) fed to the spinning nozzle (1),
- whereas the spinning nozzle (1) features an inlet (4) for the fiber composite (3),
- an internal vortex chamber (5),
- a yarn formation element (6) protruding into the vortex chamber (5) along with
- an outlet (7) for the yarn (2) produced inside the vortex chamber (5),
- whereas the spinning unit is allocated with an additive supply (8), which is designed to supply the spinning unit with an additive (9), and
- whereas the additive supply (8) includes at least one valve (10), with the assistance of which the volume flow or mass flow of the additive (9) is adjustable,
**characterized in that**
- the valve (10), during the operation of the same, opens and closes at least once per second, such that the additive (9) fed to the valve (10) leaves the valve (10) in a pulse-like manner.

2. Air jet spinning machine according to the preceding claim, **characterized in that** the frequency, with which the valve (10) is opened and closed again during its operation, features an amount that is a maximum of 100 Hz, preferentially a maximum of 25 Hz, in particular preferentially a maximum of 10 Hz.

3. Air jet spinning machine according to one of the preceding claims, **characterized in that** the valve (10) is integrated into an additive supply line (14) of the spinning unit, which connects at least one additive reservoir (15) to the spinning unit.

4. Air jet spinning machine according to one of the preceding claims, **characterized in that** the valve (10) is arranged in the area of the spinning nozzle (1), and/or is fixed to a carrier (16) of the spinning unit.

5. Air jet spinning machine according to one of the preceding claims, **characterized in that** the air jet spinning machine includes several spinning units, whereas each spinning unit is allocated with at least one own valve (10).

6. Air jet spinning machine according to one of the preceding claims, **characterized in that** all valves (10) of the air jet spinning machine, or individual groups of valves (10), are in connection with one or more common additive reservoirs (15).

7. Method for operating an air jet spinning machine,
- whereas the air jet spinning machine features at least one spinning unit,
- whereas the spinning unit features at least one spinning nozzle (1),
- whereas, during the operation of the spinning unit, a fiber composite (3) is fed to the spinning nozzle (1) through an inlet (4),
- whereas the fiber composite (3) within a vortex chamber (5) of the spinning nozzle (1) receives a twist, such that a yarn (2) is formed from the fiber composite (3), which ultimately leaves the spinning unit through an outlet (7),
- whereas during the operation of the air jet spinning machine, an additive (9) is fed to the spinning unit, at least temporarily, with the assistance of an additive supply (8), and
- whereas the volume flow and/or mass flow of the additive (9) is adjusted with the assistance of at least one valve (10),
**characterized in that**
- the valve (10), during the operation of the same, is opened and closed at least once per second, such that the additive (9) fed to the valve (10) leaves the valve (10) in a pulse-like manner.

8. Method according to the preceding claim, **characterized in that** the additive (9) is applied to the fiber composite (3) and/or is introduced into the spinning nozzle (1).

9. Method according to claim 7 or 8, **characterized in that** a gas and/or a liquid, in particular water or a liquid containing water, and/or a solid, can be used as the additive (9).

10. Method according to one of the claims 7 to 9, **characterized in that** the valve (10), during its operation, is opened and closed again with a frequency of a maximum of 100 Hz, preferentially with a frequency of a maximum of 25 Hz, in particular preferentially with a frequency of a maximum of 10 Hz.

11. Method according to the preceding claim, **characterized in that** the frequency, during the operation of the valve (10), is changed depending on defined guidelines.

12. Method according to one of the claims 7 to 11, **characterized in that** the volume flow of the fed additive (9) features, at least temporarily, an amount between 0.01 ml/min und 7.0 ml/min, preferentially between 0.02 ml/min und 5.0 ml/min, in particular preferentially between 0.05 und 3.0 ml/min, and/or that the mass flow of the fed additive (9) features, at least temporarily, an amount between 0.01 g/min und 7.0 g/min, preferentially between 0.02 g/min und 5.0 g/min, in particular preferentially between 0.05 g/min und 3.0 g/min.

13. Method according to one of the claims 7 to 12, **characterized in that** the volume flow of the fed additive (9), during normal operation of the air jet spinning machine, features an amount between 0.01 ml/min and 1.5 ml/min, preferentially between 0.01 ml/min and 1.0 ml/min, and that the volume flow of the fed additive (9), during a cleaning operation of the air jet spinning machine, features an amount between 2.0 ml/min and 7.0 ml/min, preferentially between 3.0 ml/min und 7.0 ml/min.

14. Method according to one of the claims 7 to 13, **characterized in that** the mass flow of the fed additive (9), during normal operation of the air jet spinning machine, features an amount between 0.01 g/min and 1.5 g/min, preferentially between 0.01 g/min and 1.0 g/min, and that the mass flow of the fed additive (9), during a cleaning operation of the air jet spinning machine, features an amount between 2.0 g/min and 7.0 g/min, preferentially between 3.0 g/min und 7.0 g/min.

15. Method according to one of the claims 7 to 14, **characterized in that** the control of the volume flow or mass flow of the fed additive (9) takes place by changing the frequency specified in claim 10 and/or by changing the pressure of the additive (9) fed into the valve (10).

## Revendications

1. Métier à filer à jet d'air comprenant un poste de filage
- avec une filière de filage (1) qui sert à la fabrication d'un fil (2) à partir d'un ensemble de fibres (3) délivré à la filière de filage (1),
- dans lequel la filière de filage (1) comporte une admission (4) pour l'ensemble de fibres (3),
- une chambre de turbulence intérieure (5),
- un élément de formation de fil (6) faisant saillie dans la chambre de turbulence (5) ainsi que
- une sortie (7) pour le fil (2) produit à l'intérieur de la chambre de turbulence (5),
- dans lequel une alimentation en additif (8) est attribuée au poste de filage, laquelle se présente sous une forme pour alimenter le poste de filage avec un additif (9), et
- dans lequel l'alimentation en additif (8) comporte au moins une soupape (10), à l'aide de laquelle le débit volumique et/ou massique de l'additif (9) peut être régulé,
**caractérisé en ce que**
la soupape (10), pendant son fonctionnement, est ouverte et fermée au moins une fois par seconde, de sorte que l'additif (9) introduit dans la soupape (10) quitte la soupape (10) par impulsions.

2. Métier à filer à jet d'air
selon la revendication précédente, **caractérisé en ce que** la fréquence à laquelle la soupape (10) est ouverte et refermée pendant son fonctionnement présente une valeur qui est au maximum de 100 Hz, de préférence, au maximum de 25 Hz, de manière particulièrement préférée, au maximum de 10 Hz.

3. Métier à filer à jet d'air
selon l'une des revendications précédentes, **caractérisé en ce que** la soupape (10) est intégrée dans une conduite d'alimentation (14) en additif du poste de filage, qui relie au moins un accumulateur (15) d'additif avec le poste de filage.

4. Métier à filer à jet d'air
selon l'une des revendications précédentes, **caractérisé en ce que** la soupape (10) est disposée dans la zone de la filière de filage (1) et/ou fixée en un support (16) du poste de filage.

5. Métier à filer à jet d'air
selon l'une des revendications précédentes, **caractérisé en ce que** le métier à filer à jet d'air comprend plusieurs postes de filage, dans lequel une propre soupape (10) au moins est attribuée à chaque poste de filage.

6. Métier à filer à jet d'air
selon l'une des revendications précédentes, **caractérisé en ce que** toutes les soupapes (10) du métier à filer à jet d'air ou des groupes individuels de soupapes (10) sont en relation avec un ou plusieurs accumulateurs d'additif (15) communs.

7. Procédé pour exploiter un métier à filer à jet d'air,
- dans lequel le métier à filer à jet d'air comporte au moins un poste de filage,
- dans lequel le poste de filage comporte au moins une filière de filage (1),
- dans lequel un ensemble de fibres (3) est délivré à la filière de filage (1) via une admission (4) pendant le fonctionnement du poste de filage,
- dans lequel l'ensemble de fibres (3) obtient une rotation au sein d'une chambre de turbulence (5) de la filière de filage (1), de sorte qu'un fil (2) soit formé à partir de l'ensemble de fibres (3), lequel quitte finalement le poste de filage via une sortie (7),
- dans lequel un additif (9) est délivré au moins temporairement au poste de filage à l'aide d'une alimentation en additif (8) pendant le fonctionnement du métier à filer à jet d'air, et
- dans lequel le débit volumique et/ou massique de l'additif (9) est régulé à l'aide d'au moine une soupape (10),
**caractérisé en ce que**
la soupape (10), pendant son fonctionnement, est ouverte et fermée au moins une fois par seconde, de sorte que l'additif (9) introduit dans la soupape (10) quitte la soupape (10) par impulsions.

8. Procédé selon la revendication précédente, **caractérisé en ce que** l'additif (9) est appliqué sur l'ensemble de fibres (3) et/ou introduit dans la filière de filage (1).

9. Procédé selon la revendication 7 ou 8, **caractérisé en ce que** l'additif (9) utilisé est un gaz et/ou un liquide, en particulier de l'eau ou un liquide contenant de l'eau, et/ou une matière solide.

10. Procédé selon l'une des revendications 7 à 9, **caractérisé en ce que** la soupape (10), pendant son fonctionnement, est ouverte et refermé à une fréquence maximale de 100 Hz, de préférence, à une fréquence maximale de 25 Hz, de manière particulièrement préférée, à une fréquence maximale de 10 Hz.

11. Procédé selon la revendication précédente, **caractérisé en ce que** la fréquence est modifiée pendant le fonctionnement de la soupape (10) en dépendance des valeurs définies.

12. Procédé selon l'une des revendications 7 à 11, **caractérisé en ce que** le débit volumique de l'additif (9) introduit présente au moins temporairement une valeur comprise entre 0,01 ml/min et 7,0 ml/min, de préférence, entre 0,02 ml/min et 5,0 ml/min, de manière particulièrement préférée, entre 0,05 et 3,0 ml/min, et/ou que le débit massique de l'additif (9) introduit présente au moins temporairement une valeur comprise entre 0,01 g/min et 7,0 g/min, de préférence, entre 0,02 g/min et 5,0 g/min, de manière particulièrement préférée, entre 0,05 g/min et 3,0 g/min.

13. Procédé selon l'une des revendications 7 à 12, **caractérisé en ce que** le débit volumique de l'additif (9) introduit présente pendant un fonctionnement normal du métier à filer à jet d'air une valeur comprise entre 0,01 ml/min et 1,5 ml/min, de préférence, entre 0,01 ml/min et 1,0 ml/min, et que le débit volumique de l'additif (9) introduit présente pendant un fonctionnement de nettoyage du métier à filer à jet d'air une valeur comprise entre 2,0 ml/min et 7,0 ml/min, de préférence, entre 3,0 ml/min et 7,0 ml/min.

14. Procédé selon l'une des revendications 7 à 13, **caractérisé en ce que** le débit massique de l'additif (9) introduit présente pendant un fonctionnement normal du métier à filer à jet d'air une valeur comprise entre 0,01 g/min et 1,5 g/min, de préférence, entre 0,01 g/min et 1,0 g/min, et que le débit massique de l'additif (9) introduit présente pendant un fonctionnement de nettoyage du métier à filer à jet d'air une valeur comprise entre 2,0 g/min et 7,0 g/min, de préférence, entre 3,0 g/min et 7,0 g/min.

15. Procédé selon l'une des revendications 7 à 14, **caractérisé en ce que** la régulation du débit volumique ou du débit massique de l'additif (9) introduit s'effectue par modification de la fréquence indiquée à la revendication 10 et/ou par modification de la pression de l'additif (9) introduit dans la soupape (10).
